# EUROPEAN PATENT APPLICATION

(11) **EP 3 522 349 A1**
(43) Date of publication of application: **07.08.2019**
(21) Application number: 17855331.9
(22) Date of filing: 30.06.2017
(51) Int. Cl.: H02M 3/155, B60L 9/18, H02M 7/48

(54) **POWER CONVERSION DEVICE FOR RAILROAD VEHICLE AND FOR RETROFITTING TO RAILROAD VEHICLE, AND CONTROL METHOD THEREFOR**

(30) Priority: 29.09.2016 JP 2016190515
(71) Applicant: Hitachi, Ltd., Tokyo 100-8280 (JP)
(72) Inventor: SHINOMIYA, Takeshi, Tokyo 100-8280 (JP); OGAWA, Kazutoshi, Tokyo 100-8280 (JP); KOBAYASHI, Hiroaki, Tokyo 100-8280 (JP); SUGIURA, Tetsu, Tokyo 100-8280 (JP); UCHIMURA, Hiromi, Hitachinaka-shi Ibaraki 312-8506 (JP); SAWAHATA, Nachi, Hitachinaka-shi Ibaraki 312-8506 (JP)
(74) Representative: Mewburn Ellis LLP
(86) International application number: PCT/JP2017/024136
(87) International publication number: WO 2018/061372

(57) **Abstract**

A power conversion device for a railroad vehicle according to one embodiment of the present invention is configured such that a first power conversion device for converting first DC power from a DC power source into AC power, and a second power conversion device for converting the first DC power into second DC power having a voltage level different from the voltage level of the first DC power and for storing the second DC power in a power storage means, are connected in parallel to the DC power source. The power conversion device controls the second power conversion device on the basis of a charging/discharging control command for the power storage means, and a voltage oscillation component superimposed on the first DC power. As a result, a resonance phenomenon in a DC section, to which the first and second power conversion devices are connected in parallel, can be prevented without adjusting control parameters and circuits of the first power conversion device. Consequently, emergency travel and effective utilization of power can be easily achieved by mounting a power storage device in an existing vehicle drive system, for example.

## Description

### Technical Field

The present invention relates to a power conversion device for a railroad vehicle mounting a power storage device.

### Background Art

An inverter device which has been widely used in the industry has widely used a method for converting DC power into AC power by variable voltage variable frequency (VVVF) control using a pulse width modulation (PWM) method.

For example, in the field of railroad vehicles, regenerative brake control is widely used in which kinetic energy is converted into electric energy and is returned to an overhead train line (referred to as overhead line) by accelerating a vehicle by driving an AC electric motor using the VVVF inverter device and operating the AC electric motor as a power generator at the time of braking.

In recent years, techniques for utilizing regenerative power obtained by the regenerative brake by applying the power storage device and achieving further energy saving have been examined and put into practical use.

For example, PTL 1 discloses a technique for efficiently driving a vehicle by connecting a power storage device to an input side of an inverter device in parallel and storing and effectively utilizing regenerative energy and a technique for a control circuit for attenuating electric oscillation of an input LC filter.

FIG. 7 illustrates an example in PTL 1. PTL 1 discloses a power conversion device which includes an inverter device 5 which converts DC power from a DC overhead line 1 into a three-phase AC power via a filter reactor 3 and a filter capacitor 4 to drive a electric motor 6, a DC-DC conversion circuit 8 which is connected to a DC input side of the inverter device 5 in parallel and converts the DC power into power having a voltage level different from the voltage on the DC input side of the inverter device 5, and a power storage means 9 which stores an output from the DC-DC conversion circuit 8 via a smoothing reactor 11, and discloses a control circuit of the power conversion device including a power storage means which detects an electric oscillation component superimposed on the DC input side of the inverter device 5 by an input filter including the filter reactor 3 and the filter capacitor 4 from a voltage of the filter capacitor 4 and the like, corrects a charging/discharging control command Ic** to the power storage means 9 by the detected electric oscillation component, and controls the DC-DC conversion circuit 8 to suppress the electric oscillation component.

Unlike the DC-DC conversion circuit 8, a DC-DC conversion control circuit 200 includes a voltage control unit 201, a PWM control unit 202, a high-pass filter 203, a damping control unit 204, and an adder 205 therein. A voltage detector 15 detects a filter capacitor voltage Ecf, and the high-pass filter 203 extracts an AC component ΔEcf. Thereafter, the damping control unit 204 calculates a charging/discharging current correction amount dIc necessary for preventing electric oscillation, and the adder 205 adds the charging/discharging current correction amount dIc to a charging/discharging current command Ic*. As a result, the charging/discharging current command Ic* is corrected to Ic**, and turns to be an input command to the voltage control unit 201. In this way, by superimposing AC components of the input LC filter on the charging/discharging current of the power storage device 9 by damping control of the DC-DC conversion circuit 8, the electric oscillation of the input LC filter is attenuated.

### Citation List

### Patent Literature

PTL 1: JP 2015-65732 A

### Summary of Invention

### Technical Problem

As a result of earnest investigation on retrofit of a power storage device chopper circuit to an existing railroad vehicle, inventors of the present application has obtained the following knowledge.

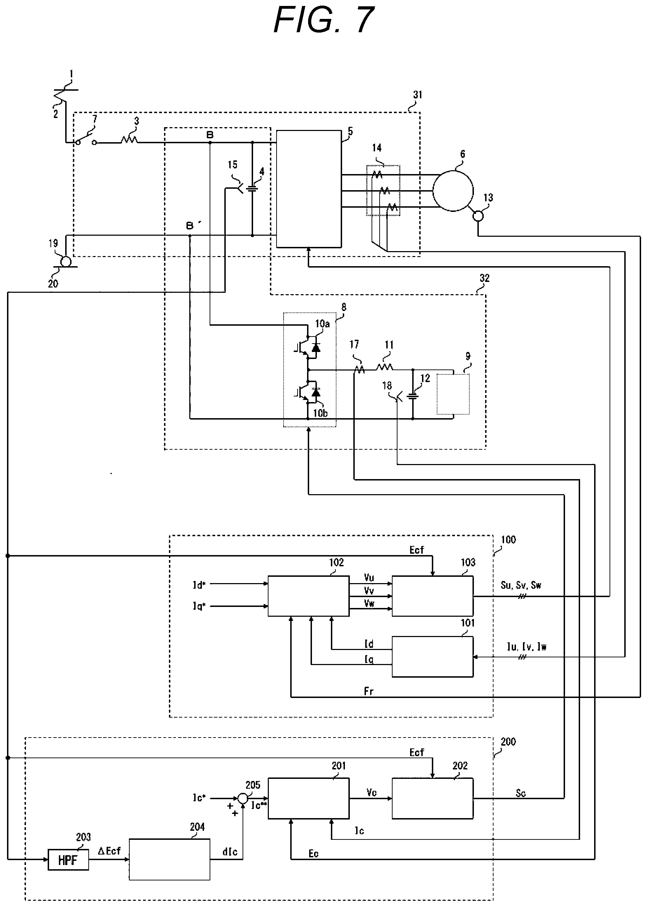

In the example of PTL 1 (FIG. 7), since a vehicle driving circuit 31 and a power storage device chopper circuit 32 share the input LC filter (filter reactor 3 and filter capacitor 4), it is not easy to connect the power storage device chopper circuit 32 to the railroad vehicle mounting only the vehicle driving circuit 31 which has been widely used in parallel (connecting at B-B' in FIG. 7) from the viewpoint of vehicle outfitting surface and necessity of reduction in inductance of the DC-DC conversion circuit 8. Therefore, it is difficult to achieve effective utilization of power and emergency travel by mounting the power storage device to the railroad vehicle mounting only the vehicle driving circuit 31 which has been widely used.

For this reason, it has been examined that the input LC filter for the power storage device chopper circuit is provided on the DC side input of the power storage device chopper circuit and the power storage device chopper circuit is connected with a DC voltage source, that is, an input part of the DC overhead line. With this configuration, the power storage device chopper circuit can be easily retrofitted to the railroad vehicle mounting only an existing vehicle driving circuit in terms of electric characteristics and an outfitting surface, for example, by achieving connection by routing wire. There is an advantage such that emergency travel and effective utilization of power can be easily achieved by mounting a power storage device in the railroad vehicle.

On the other hand, with this configuration, the control circuit indicated in PTL 1 does not consider a case where the power storage device chopper circuit described above is connected and retrofitted to the railroad vehicle mounting only an existing vehicle driving circuit. Therefore, it has been found that electric oscillation components caused by a change in resonance characteristics of the input LC filter by retrofitting the power storage device chopper circuit cannot be prevented and that it is necessary to adjust control parameters to prevent the electric oscillation components of the existing vehicle driving circuit.

An object of the present invention is to attenuate electric oscillation of an input LC filter even when a power storage device chopper circuit including the input LC filter is retrofitted and enable to attenuate the electric oscillation by controlling only the power storage device chopper circuit.

### Solution to Problem

The present invention relates to control of a second power conversion device on the basis of a charging/discharging control command for a power storage means and a voltage oscillation component superimposed on first DC power in a power conversion device for a railroad vehicle in which a first power conversion device for converting the first DC power from a DC power source into AC power and the second power conversion device for converting the first DC power into second DC power having a voltage level different from the voltage level of the first DC power and storing power to the power storage means are connected to the DC power source in parallel.

### Advantageous Effects of Invention

According to the present invention, it is possible to prevent a resonance phenomenon in a DC part to which a first power conversion device and a second power conversion device are connected in parallel without adjusting circuits and control parameters of the first power conversion device. Therefore, for example, effective utilization of power and emergency travel can be easily achieved by mounting the power storage device in an existing vehicle drive system.

### Brief Description of Drawings

FIG. 1 illustrates a control circuit of a power conversion device according to a first embodiment.
FIG. 2 illustrates a control function of a damping control unit according to the first embodiment.
FIG. 3 illustrates an operation example in which damping control is not applied and an operation example in which the damping control is applied according to the first embodiment.
FIG. 4 illustrates a control circuit of a power conversion device according to a second embodiment.
FIG. 5 illustrates a control circuit of a power conversion device according to a third embodiment.
FIG. 6 illustrates a control function of a damping control unit according to the third embodiment.
FIG. 7 illustrates an example in PTL 1.

### Description of Embodiments

An embodiment discloses a control circuit for preventing a resonance phenomenon of a DC side voltage in a power conversion device which includes an inverter device which converts DC power into AC power, a DC-DC conversion circuit which is connected to the inverter device in parallel and converts a first DC voltage into a second DC voltage, and a power storage device.

In the embodiment, a power conversion device is disclosed which includes: a first power conversion device including a first power conversion means for converting first DC power of a DC input source into AC power, an AC circuit connected to an AC side of the first power conversion means, a first reactor connected between the DC power source and the first power conversion means in series, and a first capacitor connected to a side of the first power conversion means in series where the first DC power is received; a second power conversion device including a second power conversion means for receiving the first DC power and converting the first DC power into second DC power having a voltage level different from the voltage level of the first DC power, a power storage means for storing the second DC power of the second power conversion means, a second reactor connected between the DC power source and the second power conversion means in series, a second capacitor connected to a side of the second power conversion means in series where the first DC power is received, and a third reactor for introducing the second DC power and provided between the second power conversion means and the power storage means; and a voltage oscillation component detection means for detecting a voltage oscillation component superimposed on the first DC power, in which the first power conversion device and the second power conversion device are connected to the DC input source in parallel, and electric oscillation is prevented by controlling the second power conversion means by a charging/discharging control command to the power storage means and the voltage oscillation component detected by the voltage oscillation component detection means.

Furthermore, an embodiment is disclosed which includes a power conversion device for a railroad vehicle mounting a power storage device which includes a first power conversion device for converting first DC power from a DC power source into AC power, a second power conversion device for converting the first DC power into second DC power having a voltage level different from the voltage level of the first DC power and storing the power in a power storage means, and a voltage oscillation component detection means for detecting a voltage oscillation component superimposed on the first DC power, in which the first power conversion device and the second power conversion device are connected to the DC power source in parallel, and the second power conversion device is controlled on the basis of a charging/discharging control command for the power storage means and the voltage oscillation component detected by the voltage oscillation component detection means.

The embodiment discloses a power conversion device for mounting a power storage device and for retrofitting to a railroad vehicle which is connected to and retrofitted to a DC power source of a railroad vehicle including a first power conversion device for converting first DC power from a DC power source into AC power in parallel to the first power conversion device, and the power conversion device includes a first power conversion device for converting a first DC power from the DC power source into AC power, the power conversion device which includes a second power conversion device for converting the first DC power into a second DC power having a voltage level different from the voltage level of the first DC power and storing the second DC power in a power storage means, and a voltage oscillation component detection means for detecting a voltage oscillation component superimposed on the first DC power, in which the second power conversion device is controlled on the basis of a charging/discharging control command for the power storage means and the voltage oscillation component detected by the voltage oscillation component detection means.

Furthermore, the embodiment discloses a control method for a power storage device for a railroad vehicle mounting a power storage device in which a first power conversion device for converting first DC power from a DC power source into AC power and a second power conversion device for converting the first DC power into second DC power having a voltage level different from the voltage level of the first DC power and storing the second DC power in a power storage means are connected to the DC power source in parallel, the control method including detecting a voltage oscillation component superimposed on the first DC power by a voltage oscillation component detection means, and controlling the second power conversion device on the basis of a charging/discharging control command for the power storage means and the voltage oscillation component detected by the voltage oscillation component detection means.

In addition, the embodiment discloses that the voltage oscillation component detection means makes a voltage signal detected by a voltage detector pass through a filter and detects the voltage oscillation component.

Furthermore, the embodiment discloses that phase characteristics of the voltage oscillation component detected by the voltage oscillation component detection means are changed by a filter.

The embodiment discloses that an amplitude of the voltage oscillation component detected by the voltage oscillation component detection means is increased or decreased by a multiplier.

Furthermore, the embodiment discloses that the voltage oscillation component detection means detects a connection part of the second power conversion device to the DC power source.

In addition, the embodiment discloses that the voltage oscillation component detection means detects a voltage applied to a capacitor connected to a side of the second power conversion device where the first DC power is received in parallel.

Hereinafter, the above and other novel features and effects of the present invention will be described with reference to the drawings. It is to be noted that the drawings are used solely for the purpose of understanding of the invention and do not limit the scope of the right.

### [First embodiment]

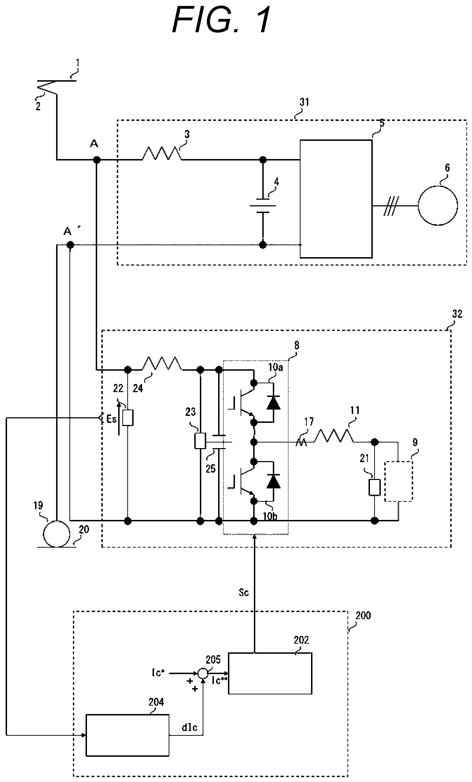

FIG. 1 illustrates a control circuit of a power conversion device according to the present embodiment.

A portion of a main circuit of the power conversion device in FIG. 1 will be described. The main circuit includes a DC overhead line 1, a power collector 2, a wheel 19, a track 20, a vehicle driving circuit 31, and a power storage device chopper circuit 32.

The vehicle driving circuit 31 drives a vehicle and includes a filter reactor 3, a filter capacitor 4, an inverter device 5, and an electric motor 6. Here, the filter reactor 3 and the filter capacitor 4 configure an input LC filter of the inverter device 5.

The power storage device chopper circuit 32 is a circuit for converting DC voltage of the DC overhead line 1 into DC voltage of a power storage device 9 and performing a charging/discharging operation of the power storage device. The power storage device chopper circuit 32 includes a filter reactor for the power storage device chopper circuit 24, a filter capacitor for the power storage device chopper circuit 25, a DC-DC conversion circuit 8 including switching elements 10a and 10b for performing DC-DC conversion, a smoothing reactor 11, and the power storage device 9. Here, the filter reactor for the power storage device chopper circuit 24 and the filter capacitor for the power storage device chopper circuit 25 configure an input LC filter of the DC-DC conversion circuit 8.

Conventionally, as illustrated in FIG. 7, the filter reactor for the power storage device chopper circuit 24 and the filter capacitor for the power storage device chopper circuit 25 are not provided at a DC side input of the power storage device chopper circuit, and the power storage device chopper circuit 32 is connected at a point B-B' in FIG. 7.

On the other hand, in the present embodiment, to easily retrofit the power storage device chopper circuit 32 to the vehicle driving circuit 31, as illustrated in FIG. 1, the filter reactor for the power storage device chopper circuit 24 and the filter capacitor for the power storage device chopper circuit 25 are provided on the DC side input of the power storage device chopper circuit as an input LC filter, and the power storage device chopper circuit 32 is connected at a point A-A' in FIG. 1. With the connection at the point A-A', a railroad vehicle including only the existing vehicle driving circuit 31 can be easily retrofitted in terms of electric characteristics and an outfitting surface, for example, by connecting the vehicle driving circuit 31 to the power storage device chopper circuit 32 with a routing wire. There is an advantage such that emergency travel and effective utilization of power can be easily achieved by mounting the power storage device in the railroad vehicle.

In FIG. 1, an example is illustrated in which the DC-DC conversion circuit 8 is a single-phase circuit. However, the DC-DC conversion circuit 8 may be multiphase circuits which are connected in parallel. In a case of the multiphase circuit, for example, a smoothing reactor corresponding to the smoothing reactor 11 is provided for each phase.

Next, a portion of the control circuit will be described. A DC-DC conversion control circuit 200 includes a PWM control unit 202, a damping control unit 204, and an adder 205 therein.

As an operation example in FIG. 1, a case where a vehicle decelerates by a regenerative brake will be described. Regenerative power generated from the electric motor 6 by the regenerative brake is output from the power collector 2 to the DC overhead line 1 via the inverter device 5, the filter capacitor 4, and the filter reactor 3. However, for example, in a case where a substation cannot absorb the regenerative power and in a case where a powering vehicle does not exist on the same track and the regenerative power cannot be used, the regenerative power is charged to the power storage device 9 from the point A-A' in FIG. 1 via the filter reactor for the power storage device chopper circuit 24, the filter capacitor for the power storage device chopper circuit 25, the DC-DC conversion circuit 8, and the smoothing reactor 11.

On the other hand, at the time of powering the vehicle when the vehicle accelerates, powering power is supplied from the DC overhead line 1 to the filter capacitor 4 and the inverter device 5 via the power collector 2 and the filter reactor 3 and drives the electric motor 6. At the same time, powering power is discharged from the power storage device 9 and supplied to the electric motor 6 via the smoothing reactor 11, the DC-DC conversion circuit 8, the filter capacitor for the power storage device chopper circuit 25, and the filter reactor for the power storage device chopper circuit 24, and from the point A-A' in FIG. 1, via the filter reactor 3, the filter capacitor 4, and the inverter device 5.

Here, the charging/discharging operation to the power storage device 9 is realized by controlling a charging/discharging current by the DC-DC conversion control circuit 200. Specifically, the PWM control unit 202 calculates a switching command Sc and controls on/off of the switching elements 10a and 10b of the DC-DC conversion circuit 8 on the basis of the switching command Sc so as to control the charging/discharging current of the power storage device 9.

To solve the problem in the electric oscillation, in the present embodiment, the damping control unit 204 is added, a voltage oscillation component ΔEs of a DC voltage Es of the DC overhead line 1 is extracted, a charging/discharging current correction amount dIc is calculated and added to a charging/discharging current command Ic* by the adder 205. As a result, the charging/discharging current command Ic* is corrected to Ic** and input to the PWM control unit 202. With this operation, the electric oscillation is prevented by the switching command Sc.

Here, a difference between the present embodiment and PTL 1 (FIG. 7) will be described.

First, the DC voltage Es of the DC overhead line 1 is input to an input of the damping control unit 204. The DC voltage Es of the DC overhead line 1 is detected by a voltage detector 22 connected to an input part (A-A' in FIG. 1) of the DC overhead line 1 of the power storage device chopper circuit 32. Oscillation of the DC voltage generated by combining the vehicle driving circuit 31 and the power storage device chopper circuit 32 causes problems such that transmission of oscillation components to the vehicle driving circuit 31 and the power storage device chopper circuit 32 causes unstable control and superimposition of a harmonic on a return line current to be flowed to the track causes malfunctions of a signal device. Therefore, it is necessary to prevent oscillation. To detect voltage oscillation on the upper side closer to the DC overhead line 1, in the present embodiment, the DC voltage Es of the DC overhead line 1 is input to the input of the damping control unit 204.

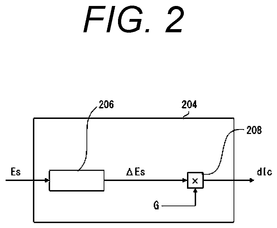

Secondly, filter characteristics in the damping control unit 204 will be described. FIG. 2 illustrates a control function of the damping control unit according to the present embodiment and processing of the damping control unit 204. The damping control unit 204 includes a filter 206 having a degree of freedom of characteristics and a multiplier 208. The voltage oscillation component ΔEs is extracted from the DC voltage Es of the DC overhead line 1 by the filter 206, and the extracted voltage oscillation component ΔEs is multiplied by a damping control amount gain G by the multiplier 208, and the charging/discharging current correction amount dIc is calculated. In FIG. 7, to detect an AC component ΔEcf of a DC voltage, a high-pass filter is used. However, in the present embodiment, since the oscillation components of the DC voltage generated by combining the vehicle driving circuit 31 and the power storage device chopper circuit 32 are mainly detected to prevent the oscillation components, the filter has the degree of freedom of characteristics. Accordingly, oscillation prevention control with high sensitivity can be performed only on the oscillation component to be prevented. Furthermore, phase characteristics of a detection signal of the DC voltage Es can be optionally changed by the filter 206, and oscillation prevention control with higher sensitivity can be achieved by changing the phase characteristics.

In addition, in a state where the number of trains running on the same railway track is not enough at the time of regenerative braking described above, the power storage device 9 absorbs the regenerative power. However, there is a case where the regenerative power cannot be fully absorbed by only the power storage device 9. In this case, the inverter device 5 performs control to reduce the regenerative power by reducing regenerative brake power (light load regenerative control). However, particularly, the voltage oscillation becomes significantly large at this time, and there is a case where the light load regenerative control by the inverter device 5 and charge control by the power storage device chopper circuit 32 interfere with each other. At this time, by using the configuration according to the present embodiment, the voltage oscillation can be prevented by only adjusting parameters of the damping control unit 204 on the side of the power storage device chopper circuit 32. There is an advantage such that, even in a case where the power storage device chopper circuit 32 is retrofitted, the power conversion device mounting the power storage device can be easily realized without adjusting circuits and control parameters on the side of the inverter device 5.

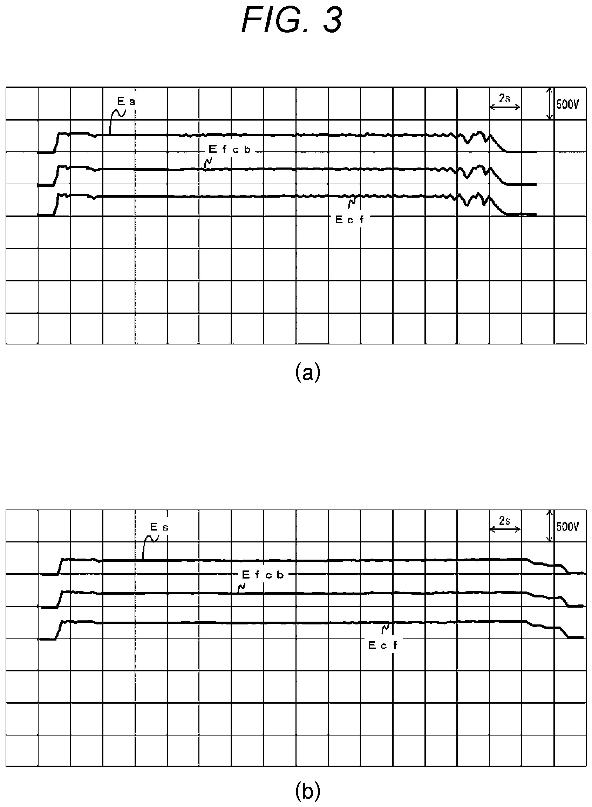

As an example, FIG. 3 illustrates an operation example in a case where the damping control is not applied according to the present embodiment and an operation example in a case where the damping control is applied. An operation condition is a condition under which the inverter device 5 in the regenerative brake described above performs the light load regenerative control. FIG. 3(a) illustrates an operation example in which the damping control is not applied, and FIG. 3(b) illustrates an operation example in which the damping control is applied. As illustrated in FIG. 3(a), when the present embodiment is not applied, a voltage Es of the DC overhead line, a voltage Efcb of the filter capacitor for the power storage device chopper circuit 25, and a voltage Ecf of the filter capacitor 4 are oscillated mainly in the second halves of the waveforms. In this example, voltage oscillation with a frequency about several Hz is found Therefore, if the present embodiment is applied, the filter 206 of the damping control unit 204 illustrated in FIG. 2 is replaced with a bandpass filter, for example, having a central frequency of about several Hz which is the frequency of the voltage oscillation, and the function of the damping control unit 204 illustrated in FIG. 2 is introduced, as illustrated in FIG. 3(b), the oscillations of the voltage Es of the DC overhead line, the voltage Efcb of the filter capacitor for the power storage device chopper circuit 25, and the voltage Ecf of the filter capacitor 4 are prevented.

As described above, according to the present embodiment, even in a case where the DC-DC conversion circuit is retrofitted to an existing inverter device, a resonance phenomenon, that is, the voltage oscillation of a DC part connected to the DC-DC conversion circuit in parallel can be prevented without adjusting circuits and control parameters of the inverter device. Accordingly, effective utilization and emergency travel can be easily achieved by mounting the power storage device in an existing vehicle drive system.

### [Second embodiment]

In the present embodiment, unlike the first embodiment, a damping control is included in a DC-DC conversion control circuit. Differences from the first embodiment will be mainly described below.

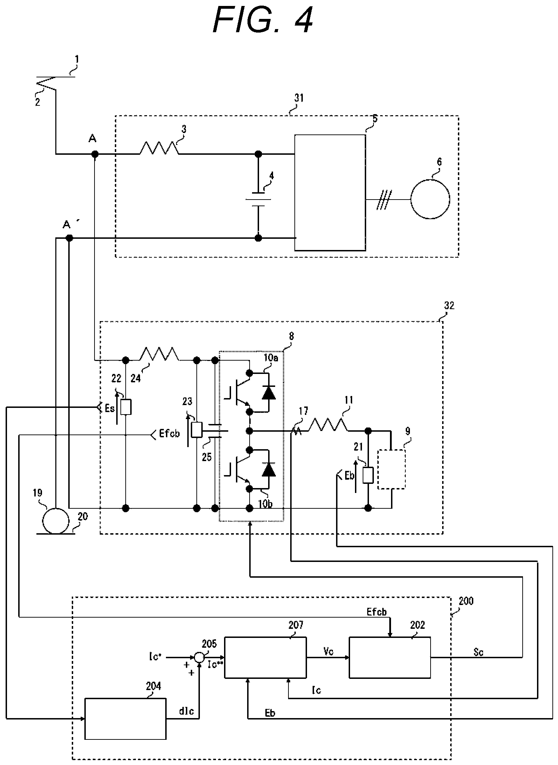

FIG. 4 illustrates a control circuit of a power conversion device according to the present embodiment. A DC-DC conversion control circuit 200 according to the present embodiment includes a PWM control unit 202, a damping control unit 204, and a voltage command generation unit 207 therein. In the DC-DC conversion control circuit 200 according to the present embodiment, a charging/discharging current Ic flowing through a smoothing reactor 11 detected by a current detector 17, a storage voltage Eb detected by a voltage detector 21, and a charging/discharging current command Ic* are input to the voltage command generation unit 207, and a storage voltage command Vc to maintain the charging/discharging current constant is calculated. Thereafter, the PWM control unit 202 detects a voltage Efcb of a filter capacitor for the power storage device chopper circuit 25 detected by a voltage detector 23 and calculates a switching command Sc on the basis of the storage voltage command Vc. Specifically, by controlling on/off of switching elements 10a and 10b of a DC-DC conversion circuit 8 on the basis of the switching command Sc, a charging/discharging current Ic of a power storage device 9 is controlled.

To solve the problem in the electric oscillation, in the present embodiment, the damping control unit 204 is added, a voltage oscillation component ΔEs of a DC voltage Es of a DC overhead line 1 is extracted, a charging/discharging current correction amount dIc is calculated and added to the charging/discharging current command Ic* by an adder 205. As a result, the charging/discharging current command Ic* is corrected to Ic**, and turns to be an input command to the voltage command generation unit 207. Thereafter, the corrected command is input to the PWM control unit 202, and electric oscillation is prevented by the switching command Sc.

### [Third embodiment]

In the present embodiment, unlike the first embodiment and the second embodiment, a voltage Efcb of a filter capacitor for a power storage device chopper circuit is used for an input of damping control. Differences from the first embodiment and the second embodiment will be mainly described below.

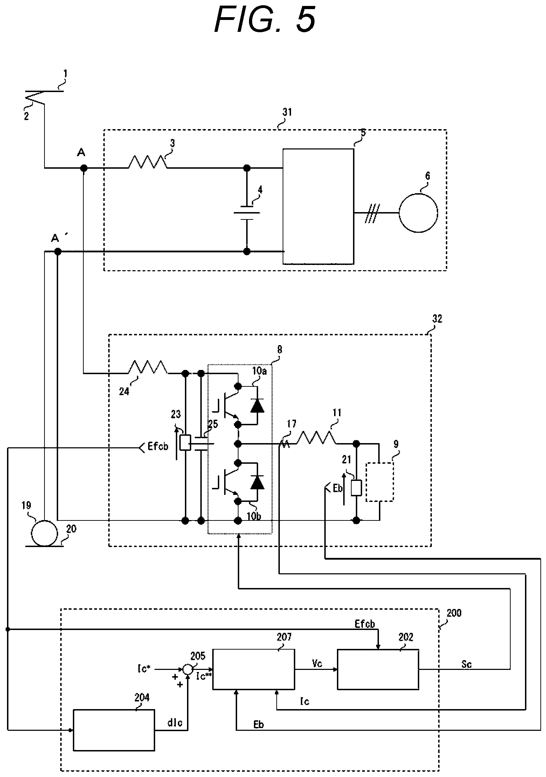

FIG. 5 illustrates a control circuit of a power conversion device according to the present embodiment. In the present embodiment, different from the circuit configuration indicated in the first embodiment, the voltage Efcb of the filter capacitor for the power storage device chopper circuit 25 is used for the input of the damping control unit 204. To detect the voltage Efcb of the filter capacitor for the power storage device chopper circuit 25, a voltage detector 23 connected to the filter capacitor for the power storage device chopper circuit 25 in parallel is used.

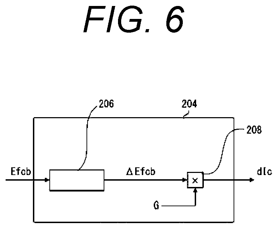

FIG. 6 illustrates a control function of a damping control unit according to the present embodiment. In the damping control unit 204 according to the present embodiment, a voltage oscillation component ΔEfcb is extracted from the voltage Efcb of the filter capacitor for the power storage device chopper circuit 25 by a filter 206, the extracted component is multiplied by a damping control amount gain G by a multiplier 208, and a charging/discharging current correction amount dIc is calculated.

According to the present embodiment, voltage oscillation can be prevented by only the voltage detector 23 provided for normal charging/discharging control of a power storage device 9, and the number of voltage detectors of a power storage device chopper circuit 32 can be smaller than that in the first embodiment.

### Reference Signs List

1 DC overhead line
2 power collector
3 filter reactor
4 filter capacitor
5 inverter device
6 electric motor
7 breaker
8 DC-DC conversion circuit
9 power storage device
10a, 10b switching element
11 smoothing reactor
12 smoothing capacitor
13 speed detector
14, 17 current detector
15, 18, 21, 22, 23 voltage detector
19 wheel
20 track
24 filter reactor for power storage device chopper circuit
25 filter capacitor for power storage device chopper circuit
31 vehicle driving circuit
32 power storage device chopper circuit
100 inverter control circuit
101 coordinate conversion unit
102 voltage control unit
103 PWM control unit
200 DC-DC conversion control circuit
201 voltage control unit
202 PWM control unit
203 high-pass filter
204 damping control unit
205 adder
206 filter
207 voltage command generation unit
208 multiplier

## Claims

1. A power conversion device for a railroad vehicle mounting a power storage device comprising:
a first power conversion device configured to convert first DC power from a DC power source into AC power; and
a second power conversion device configured to convert the first DC power into second DC power having a voltage level different from the voltage level of the first DC power and store the second DC power in a power storage means; and
a voltage oscillation component detection means configured to detect a voltage oscillation component superimposed on the first DC power, wherein
the first power conversion device and the second power conversion device are connected to the DC power source in parallel, and
the second power conversion device is controlled on the basis of a charging/discharging control command for the power storage means and the voltage oscillation component detected by the voltage oscillation component detection means.

2. The power conversion device for a railroad vehicle according to claim 1, wherein
the voltage oscillation component detection means makes a voltage signal detected by a voltage detector pass through a filter and detects the voltage oscillation component.

3. The power conversion device for a railroad vehicle according to claim 1, wherein
phase characteristics of the voltage oscillation component detected by the voltage oscillation component detection means are changed by a filter.

4. The power conversion device for a railroad vehicle according to claim 1, wherein
an amplitude of the voltage oscillation component detected by the voltage oscillation component detection means is increased or decreased by a multiplier.

5. The power conversion device for a railroad vehicle according to claim 1, wherein
a detection point of the voltage oscillation component detection means is a connection part of the second power conversion device to the DC power source.

6. The power conversion device for a railroad vehicle according to claim 1, wherein
a detection point of the voltage oscillation component detection means is a voltage applied to a capacitor connected to a side of the second power conversion device where the first DC power is received in parallel.

7. A power conversion device for retrofitting to a railroad vehicle for mounting a power storage device which is connected to and retrofitted to the DC power source of a railroad vehicle including a first power conversion device for converting first DC power from a DC power source into AC power in parallel to the first power conversion device, the power conversion device comprising:
a second power conversion device configured to convert the first DC power into second DC power having a voltage level different from the voltage level of the first DC power and store the second DC power in a power storage means; and
a voltage oscillation component detection means configured to detect a voltage oscillation component superimposed on the first DC power, wherein
the second power conversion device is controlled on the basis of a charging/discharging control command for the power storage means and the voltage oscillation component detected by the voltage oscillation component detection means.

8. The power conversion device for retrofitting to a railroad vehicle according to claim 7, wherein
the voltage oscillation component detection means makes a voltage signal detected by a voltage detector pass through a filter and detects a voltage oscillation component.

9. The power conversion device for retrofitting to a railroad vehicle according to claim 7, wherein
phase characteristics of the voltage oscillation component detected by the voltage oscillation component detection means are changed by a filter.

10. The power conversion device for retrofitting to a railroad vehicle according to claim 7, wherein
an amplitude of the voltage oscillation component detected by the voltage oscillation component detection means is increased or decreased by a multiplier.

11. The power conversion device for retrofitting to a railroad vehicle according to claim 7, wherein
a detection point of the voltage oscillation component detection means is a connection part of the second power conversion device to the DC power source.

12. The power conversion device for retrofitting to a railroad vehicle according to claim 7, wherein
a detection point of the voltage oscillation component detection means is a voltage applied to a capacitor connected to a side of the second power conversion device where the first DC power is received in parallel.

13. A control method for a power conversion device for a railroad vehicle mounting a power storage device in which a first power conversion device for converting first DC power from a DC power source into AC power and a second power conversion device for converting the first DC power into second DC power having a voltage level different from the voltage level of the first DC power and storing the second DC power in a power storage means are connected to the DC power source in parallel, the control method comprising:
detecting a voltage oscillation component superimposed on the first DC power by a voltage oscillation component detection means; and
controlling the second power conversion device on the basis of a charging/discharging control command for the power storage means and the voltage oscillation component detected by the voltage oscillation component detection means.

14. The control method of a power conversion device according to claim 13, wherein
the voltage oscillation component detection means makes a voltage signal detected by a voltage detector pass through a filter and detects a voltage oscillation component.

15. The control method for a power conversion device according to claim 13, wherein
phase characteristics of the voltage oscillation component detected by the voltage oscillation component detection means are changed by a filter.

16. The control method for a power conversion device according to claim 13, wherein
an amplitude of the voltage oscillation component detected by the voltage oscillation component detection means is increased or decreased by a multiplier.

17. The control method for a power conversion device according to claim 13, wherein
the voltage oscillation component detection means detects a connection part of the second power conversion device to the DC power source.

18. The control method for a power conversion device according to claim 13, wherein
the voltage oscillation component detection means detects a voltage applied to a capacitor connected to a side of the second power conversion device where the first DC power is received in parallel.
